# FASCICULE DE BREVET EUROPEEN

(11) **EP 2 021 836 B1**
(45) Date de publication et mention de la délivrance du brevet: **29.06.2011**
(21) Numéro de dépôt: 07766083.5
(22) Date de dépôt: 22.05.2007
(51) Int. Cl.: G02B 1/10, C03C 17/42, G02B 1/04

(54) **ARTICLE D'OPTIQUE COMPORTANT UN REVETEMENT EXTERNE HYDROPHOBE ET/OU OLEOPHOBE REVETU D'UNE COUCHE TEMPORAIRE**
MIT EINER TEMPORÄREN BESCHICHTUNG BESCHICHTETER OPTISCHER ARTIKEL MIT WASSER- UND/ODER ÖLABWEISENDER AUSSENBESCHICHTUNG
OPTICAL ARTICLE COMPRISING AN EXTERNAL WATER- AND/OR OIL-REPELLENT COATING COATED WITH A TEMPORARY COATING

(30) Priorité: 26.05.2006 FR 0651923
(43) Date de publication de la demande: 11.02.2009
(73) Titulaire: ESSILOR INTERNATIONAL (Compagnie Générale d'Optique), F-94220 Charenton-le-Pont (FR)
(72) Inventeur: HABASSI, Chefik, F-94220 Charenton Le Pont (FR); LY, Leang, F-94220 Charenton Le Pont (FR)
(74) Mandataire: Catherine, Alain
(86) Numéro de dépôt international: PCT/FR2007/051310
(87) Numéro de publication internationale: WO 2007/138215

(56) Documents cités:
- WO-A-00/68326
- WO-A-02/092524
- WO-A-03/057641
- WO-A2-01/02496
- US-B1- 6 250 512

## Description

L'invention se rapporte d'une manière générale au domaine des articles d'optique, en particulier des lentilles ophtalmiques, pourvus d'un revêtement externe à propriété hydrophobe et/ou oléophobe (top coat).

Ces revêtements externes hydrophobes et/ou oléophobes sont bien connus dans la technique.

Ces revêtements externes hydrophobes et/ou oléophobes, qui sont généralement associés à des revêtements anti-reflet, ont pour objet de rendre la lentille ophtalmique moins salissante. Il s'agit le plus souvent de matériau de type fluorosilane qui diminue l'énergie de surface afin d'éviter l'adhérence de souillures grasses qu'il est ainsi plus facile d'éliminer.

Un des problèmes engendrés par ces revêtements externes hydrophobes et/ou oléophobes est qu'ils atteignent une efficacité telle que l'adhérence à l'interface d'un patin adhésif/surface du revêtement hydrophobe et/ou oléophobe nécessaire au montage des lentilles lors d'une opération de débordage s'en trouve altérée, voire compromise.

Le débordage est la dernière étape de finition d'une lentille ophtalmique et est l'opération qui consiste à usiner la tranche ou périphérie de la lentille de façon à la conformer aux dimensions et à la forme requise pour adapter la lentille à la monture de lunette dans laquelle elle est destinée à prendre place.

Le débordage est réalisé sur une meuleuse automatisée comprenant des meules diamantées qui effectuent l'usinage défini ci-dessus et il faut donc maintenir fixement la lentille à déborder dans la meuleuse.

Pour ce faire, la première phase consiste à fixer un gland au centre de la surface convexe de la lentille au moyen d'un patin adhésif tel qu'un patin adhésif double face.

Le gland auquel adhère la lentille par l'intermédiaire du patin adhésif est alors mécaniquement fixé dans l'axe de montage de la meuleuse et un bras axial vient bloquer la lentille en appliquant une force centrale sur la face de la lentille opposée au gland.

Lors du débordage, la lentille ne doit pas subir un désaxage supérieur à 2°, de préférence d'au plus 1 °, et par conséquent l'adhésion du patin sur la surface de la lentille est essentielle à l'obtention d'un débordage satisfaisant.

Pour remédier à ces difficultés de débordage des lentilles pourvues d'un revêtement externe hydrophobe et/ou oléophobe, on a proposé de former sur ces revêtements hydrophobes et/ou oléophobes un revêtement temporaire, de nature organique ou minéral. Par exemple, les demandes de brevet européen EP 1 392 613 et EP 1 633 684, au nom de ESSILOR, décrivent l'emploi d'un revêtement temporaire, de nature organique ou minérale, qui accroît l'énergie de surface et permet donc à l'opticien de procéder à un débordage fiable de la lentille. Après débordage, le revêtement temporaire doit être enlevé afin de restituer au revêtement externe hydrophobe et/ou oléophobe ses propriétés de surface. Il va de soi, qu'après retrait du revêtement temporaire, le revêtement externe hydrophobe et/ou oléophobe doit présenter des propriétés de surface aussi proche que possible de ses propriétés initiales.

Bien que les revêtements temporaires décrits dans les demandes de brevet européen EP 1 392 613 et EP 1 633 684 conduisent, après leur enlèvement, à des revêtements externes hydrophobes et/ou oléophobes ayant de bonnes propriétés de surface et un angle de contact statique avec l'eau élevé (typiquement 112°), il est souhaitable d'augmenter encore cette valeur d'angle de contact.

Le cas échéant, après l'opération de débordage principale de l'article d'optique, on peut souhaiter effectuer une opération de reprise de débordage, et/ou un perçage du verre, la zone percée servant de point de fixation à une branche de monture de lunettes.

Pour ces dernières étapes, en particulier le perçage du verre, il est fondamental que l'ensemble gland/patin adhésif de maintien reste en position sur la surface de l'article, car il constitue un repère permettant de positionner les forets pour le perçage des trous.

Le film décrit dans la demande de brevet WO 05/015 270 permet d'assurer le débordage principal, mais l'on constate systématiquement que l'ensemble gland/patin adhésif de maintien se détache spontanément dans les secondes qui suivent cette opération de débordage principal.

Dès le début de l'opération de débordage, il semble que l'eau projetée sur l'article lors de cette opération de débordage, s'infiltre sous le film temporaire qui s'enroule autour de lui-même. Dans ces conditions, il est alors impossible de procéder ultérieurement à une reprise de débordage ou à un perçage du verre.

La demande de brevet WO 03/05 7641 prévoit de déposer un matériau organique sur une couche de MgF₂. Par conséquent, le film temporaire d'un matériau organique n'est pas déposé directement sur le revêtement externe hydrophobe et/ou oléophobe.

La présente invention a donc pour objet de fournir un article d'optique, notamment une lentille ophtalmique, comportant un revêtement externe hydrophobe et/ou oléophobe directement revêtu par une couche temporaire qui :
- après retrait de la couche temporaire, permet de récupérer un revêtement externe hydrophobe et/ou oléophobe ayant des propriétés pratiquement identiques à ses propriétés initiales et en particulier un angle de contact statique avec l'eau pratiquement égal à l'angle de contact statique avec l'eau initial; et/ou
- permet le cas échéant, une opération de reprise de débordage ; et/ou
- permet d'effectuer un perçage du verre, la zone percée servant de point de fixation à une branche de monture de lunettes.

Les buts ici sont atteints selon l'invention par un article d'optique comportant sur une de ses surfaces principales un revêtement externe hydrophobe et/ou oléophobe de faible énergie de surface, caractérisé en ce qu'une couche temporaire d'une composition de latex de polyuréthane séchée est directement déposée sur le revêtement externe hydrophobe et/ou oléophobe.

La couche temporaire, de préférence pelable, a en général une épaisseur de 10 à 40 µm de préférence 15 à 30 µm et mieux 15 à 20 µm et présente de préférence un allongement à la rupture égal ou inférieur à 200%, mieux égal ou inférieur à 150%.

Selon le procédé de dépôt de la couche temporaire, l'épaisseur de la couche peut varier localement. En particulier, dans le cas d'un dépôt par dip (au trempé) dans un bain de composition liquide de revêtement, l'épaisseur est plus élevée dans la partie basse du verre (partie contactant le liquide de la composition de revêtement temporaire en premier et quittant le bain en dernier lors de la remontée du verre).

L'épaisseur moyenne de la couche temporaire est la moyenne de 3 épaisseurs mesurées en 3 points de la surface : deux points opposés : point haut (à environ 5 mm de la périphérie du verre), centre et point bas (à environ 5 mm de la périphérie du verre), dans le cas d'un dépôt par dip.

Les gammes d'épaisseurs moyennes sont les mêmes que les gammes d'épaisseur mentionnées précédemment.

De préférence, la couche temporaire a une énergie de surface supérieure ou égale à 15 mJ/m², mieux égale ou supérieure à 20 mJ/m², mieux encore égale ou supérieure à 30 mJ/m². De préférence encore, la couche temporaire a une composante polaire de l'énergie de surface inférieure à 26 mJ/m².

Dans la présente demande, le terme "article d'optique" désigne un substrat en verre organique ou minéral, optiquement transparent, traité ou non, selon qu'il comporte un ou plusieurs revêtements de nature diverse ou qu'il reste nu.

Les énergies de surface sont calculés selon la méthode OWENS-WENDT décrite dans la référence suivante : "Estimation of a surface force energy of polymers" OWENS D.K., WENDT R.G. (1969) J. Appl. POLYM. SCI, 13, 1741-1747.

Les articles d'optique de l'invention sont des articles d'optique, notamment des lentilles ophtalmiques, qui comportent un revêtement externe hydrophobe et/ou oléophobe et préférentiellement des articles d'optique comportant à la fois un revêtement externe hydrophobe et/ou oléophobe déposé sur un revêtement anti-reflet mono ou multi-couche.

En effet, les revêtements externes hydrophobes et/ou oléophobes sont généralement appliqués sur des articles d'optique comportant un revêtement anti-reflet, en particulier en matière minérale, afin de réduire leur tendance marquée à la salissure, par exemple vis-à-vis des dépôts graisseux.

Comme cela est connu, les revêtements externes hydrophobes et/ou oléophobes sont obtenus par application, sur la surface du revêtement anti-reflet de composés diminuant l'énergie de surface de l'article d'optique.

De tels composés ont été largement décrits dans l'art antérieur, par exemple dans les brevets US-4,410,563, EP 0 203 730, EP 749 021, EP 844 265, et EP 933 377.

Les composés à base de silane porteur de groupements fluorés, en particulier de groupements perfluorocarbone ou perfluoropolyéther, sont le plus souvent utilisés.

A titre d'exemple, on peut citer des composés de silazane, de polysilazane ou de silicone comprenant un ou plusieurs groupements fluorés tels que cités précédemment.

Un procédé connu consiste à déposer sur le revêtement anti-reflet des composés porteurs de groupements fluorés et des groupements Si-R, R représentant un groupe -OH ou un précurseur de celui-ci, préférentiellement un groupe alcoxy. De tels composés peuvent effectuer à la surface du revêtement anti-reflet, directement ou après hydrolyse, des réactions de polymérisation et/ou réticulation.

L'application des composés diminuant l'énergie de surface de l'article d'optique est classiquement effectuée par trempé dans une solution du composé, par centrifugation ou dépôt en phase vapeur, notamment.

Généralement, le revêtement externe hydrophobe et/ou oléophobe a une épaisseur inférieure à 10 nm, et mieux encore inférieure à 5 nm.

En général, le revêtement externe hydrophobe et/ou oléophobe de faible énergie de surface, a une énergie de surface égale ou inférieure à 14 mJ/m², de préférence égale ou inférieure à 13 mJ/m², mieux égale ou inférieure à 12 mJ/m².

Comme indiqué précédemment, la couche temporaire de l'invention est une couche séchée d'une composition de latex de polyuréthane déposée directement sur le revêtement externe hydrophobe et/ou oléophobe.

Comme cela est bien connu, un latex est une dispersion dans un milieu aqueux de particules de polymère ou de copolymère. Le milieu aqueux peut être de l'eau, par exemple de l'eau distillée ou de l'eau désionisée, ou encore un mélange d'eau et d'un ou plusieurs solvant, notamment d'eau et d'alcanol, généralement un alcanol en C1 à C6, et de préférence l'éthanol.

Dans la présente invention, le terme "polyuréthane" englobe à la fois les (co)polymères de polyuréthane proprement dits, c'est-à-dire les polymères obtenus par condensation d'au moins un polyisocyanate et d'au moins un polyol et éventuellement d'un prolongateur de chaîne, et les polyuréthane-urée, c'est-à-dire les (co)polymères obtenus par condensation d'au moins un polyisocyanate et d'une polyamine, et éventuellement d'un prolongateur de chaîne, et des mélanges de ceux-ci.

De préférence, les polyuréthanes et polyuréthane-urée de l'invention résultent de la condensation d'un diisocyanate avec un diol et/ou une diamine. De préférence encore, les polyuréthanes et polyuréthane-urée de l'invention sont des polyuréthanes et polyuréthane-urée aliphatiques linéaires ou cycliques, c'est-à-dire obtenus par condensation de polyisocyanates aliphatiques linéaires ou cycliques avec des polyols et/ou des polyamines aliphatiques linéaires ou cycliques.

Parmi les polyisocyanates utiles pour la formation des polyuréthanes et polyuréthane-urée de l'invention, et notamment les diisocyanates préférés, on peut citer le toluène-2,4-diisiocyanate, le toluène -2,6-diisocyanate, le diphénylméthane-4,4'-diisocyanate, le diphénylméthane-2,4'-diisocyanate, le paraphénylène diisocyanate, le biphényl diisocyanate, le 3,3'-diméthyl-4,4'-diphénylène diisocyanate, le tétraméthylène-1,4-diisocyanate, l'hexaméthylène-1,6-diisocyanate, le 2,2,4-triméthylhexane-1,6-diisocyanate, le lysineméthylester diisocyanate, le bis(isocyanoéthyl) fumarate, l'isophorone diisocyanate (IPDI), l'éthylène diisocyanate, le dodécane-1,12-diisocyanate, le cyclobutane-1,3-diisocyanate, le cyclohexane-1,3-diisocyanate, le cyclohexane-1,4-diisocyanate, le méthylcyclohexyl diisocyanate, l'hexahydrotoluène-2,4-diisocyanate, le méthylcyclohexyl diisocyanate, l'hexahydrotoluène-2,4-diisocyanate, l'hexahydrotoluène-2,6-diisocyanate, l'hexahydrophénylène-1,3-diisocyanate, l'hexahydrophénylène-1,4-diisocyanate, le perhydrodyphénylméthane-2,4'-diisocyanate, le perhydrodiphénylméthane-2,4'-diisocyanate, le perhydrodiphénylméthane-2,4'-diisyocanate, le perhydrophénylméthane-4,4'-diisocyanate (ou bis-(4-isocyanatocyclohexil)-méthane, ou 4,4'-dicyclohexilméthane diisocyanate) et leurs mélanges.

Les polyisocyanates préférés sont les diisocyanates aliphatiques tels que l'hexaméthylène-1,6-diisocyanate, l'isophorone diisocyanate, l'éthylène diisocyanate, le dodécane-1,12-diisocyanate, le cyclohexane-1,3-diisocyanate, le bis-(4-isocyanato-cyclohexyl)-méthane et leurs mélanges. Le diisocyanate préféré est l'isophorone diisocyanate.

D'autres polyisocyanates convenant pour les polyuréthanes et polyuréthane-urée de l'invention sont décrits en détail dans le document WO 98/37 115.

Parmi les polyols convenant pour les polyuréthanes de l'invention on peut citer le pentaérythritol, le triméthylol éthane, le triméthylol propane, l'acide di(triéthylol propane) diméthylol propionique, l'éthylène glycol, le 1,2 et le 1,3-propylène glycol, le 1,2-butanediol, le 1,4-buténediol, le 1,3-butanediol, le 2,3-butanediol, le 2,2,4-triméthyl-1,3-pentanediol, le 1,5-pentanediol, le 2,4-pentanediol, le 1,6-hexanediol, le 2,5-hexanediol, le 1,8-optanediol, le 2-méthyl-1,3pentadiol, le 2,4-heptanediol, le 2-éthyl-1,3-hexanediol, le 2-méthyl-1,3-propanediol, le 2,2-diméthyl-1,3-propanediol (néopentylglycol), le 1,4-cyclohexanediol, le 2,2-diméthyl-3-hydroxypropyl-2,2-diméthyl-3-hydroxypropionate, le 1,2,6-hexanetriol, le 1,2,4-butanetriol, le glycerol, le sorbitol, le manitol, le diéthylèneglycol, le triéthylèneglycol, le tétraéthylèneglycol, le dipropylèneglycol, le tripropylèneglycol, le dibutylèneglycol, le 1,4-bis(hydroxyméthyl)cyclohexane, le 1,2-bis(hydroxyméthyl)cyclohexane, le 1,2-bis(hydroxyéthyl)cyclohexane, les bis(hydroxypropyl)lantoïnes, le trishydroxyéthylisocyanurate.

Les polyols préférés sont les diols aliphatiques et notamment le polypropylène glycol.

Une autre classe de polyols convenant pour les polyuréthanes et polyuréthane-urée de l'invention sont les polyéthers polyols tels que les polyoxyalkylènes polyols, les polyols polyalcoxylés tels que les poly(oxytétraméthylène)diols et leurs mélanges.

Les polyamines préférées sont les diamines, en particulier les diamines aliphatiques linéaires et cycliques.

Parmi les diamines on peut citer le diaminométhane, l'éthylène diamine, le 1,2-diaminopropane, le 1,3-diaminopropane, le 1,4-diaminobutane, le 1,6-diaminohexane, le 1,4-diaminocyclohexane, le 4,4'-diaminodicyclohexylméthane, le 1-amino-3-aminométhyl-3,5,5trimétrylcyclohexane, la triméthylamine.

On peut également utiliser pour la préparation des polyuréthanes et polyuréthane-urée convenant pour l'invention des amino-alcools tels que la monoéthanolamine, la diéthanolamine.

Les polyuréthanes et leur mode de préparation sont décrits entre autres, dans le brevet US-6,187,444.

De préférence, les polyuréthanes de l'invention ne comportent pas de fonctions acryliques ou méthacryliques, et en particulier pas de fonction acrylique ou méthacrylique polymérisable.

Les latex de polyuréthane convenant pour la présente invention sont disponibles dans le commerce, par exemple auprès de la société BAXENDEN sous les dénominations W 234 et W 240 (polyuréthane-urée) ou sous la dénomination Pellimer TC^{tm} (polyuréthane-urée) auprès de la société SOCOMOR et PROXR 910^{®} (polyuréthane) auprès de la société SYNTRON.

Le Pellimer TC sera utilisé par la suite après une dilution à l'eau. (On effectue un mélange constitué de 80% en poids de Pellimer TC pour 20 % en poids d'eau). Ce mélange obtenu sera dénommé par la suite TC80F.

Les compositions de latex de polyuréthane selon l'invention peuvent bien évidemment être des mélanges de latex de polyuréthane, en particulier des latex de polyuréthane du commerce.

Dans une réalisation particulière de l'invention, la composition de latex de polyuréthane comprend également une faible proportion, jusqu'à 10% en poids de la composition, d'un latex (méth)acrylique, de préférence d'un latex acrylique. De préférence, la proportion en poids de latex (méth)acrylique varie de 0,1 à 10% en poids et mieux de 2 à 6% en poids par rapport au poids total de la composition de latex.

La proportion en poids d'extrait sec du latex acrylique par rapport au poids total d'extrait sec de la composition varie également de préférence de 0,1 à 10% en poids, et mieux de 2 à 6% en poids.

La présence de latex (méth)acrylique a pour avantage, d'une part de diminuer le caractère hydrophile du matériau et d'autre part de rendre la couche finale sèche plus rigide et de réduire son allongement à la rupture.

Ces latex (méth)acryliques sont disponibles dans le commerce notamment auprès de la société SYNTRON sous les dénominations PROXAM 185 RS^{®} (résine acrylique), PROXAM 157^{®} (copolymère acrylique), PROXAM N 360^{®} (copolymère acrylique).

De préférence, les compositions de latex PU selon l'invention sont exemptes de particules colloïdales minérales ou de magnésium.

L'obtention des résultats avantageux de l'invention, en particulier l'adhérence du patin adhésif ne nécessite pas la présence de colloïdes d'oxyde minéral ou de magnésium.

En général, les compositions de latex PU selon l'invention comprennent encore de préférence un ou plusieurs agents tensio-actifs généralement à raison de 0,5 à 10% en poids par rapport au poids total de la composition de latex, préférentiellement 0,5 à 6% en poids.

En général, les compositions de latex PU selon l'invention ont une teneur en solide (extrait sec) de 25 à 55% en poids, de préférence de 25 à 50%, mieux de 25 à 45% en poids par rapport au poids total de la composition de latex.

Leur viscosité à température ambiante varie de préférence de 5 à 50 cp, et mieux de 7 à 46 cp.

Les couches temporaires de l'invention peuvent être déposées sur le revêtement hydrophobe et/ou oléophobe par tout type de moyen, mais préférentiellement par trempage (dip coating), centrifugation, pulvérisation, ou appliquée au moyen d'un pinceau (brush coating), de préférence par trempage.

Le dépôt peut être effectué sur la totalité de la surface de la face de la lentille destinée à recevoir le patin adhésif de maintien ou sur une partie de celle-ci, en particulier dans la partie centrale de la lentille.

Dans un mode de réalisation, on peut appliquer la couche temporaire sur la partie centrale au moyen d'un pinceau.

De préférence, aucun autre revêtement n'est disposé sur la surface de la couche temporaire, autrement dit la couche temporaire est préférentiellement monocouche et lors d'un débordage, le patin adhésif de maintien vient directement en contact de la surface de la couche temporaire à base de latex de polyuréthane.

De préférence, la couche temporaire est optiquement inactive, c'est-à-dire qu'elle permet la mesure de puissance avec des moyens de mesure classiques tel que le frontofocomètre.

Après application, la composition de latex selon l'invention est séchée, généralement par un chauffage à des températures variant typiquement de 40°C à 80°C, pendant une durée de quelques minutes à quelques heures.

Les résultats avantageux de l'invention sont obtenus par simple séchage et ne nécessitent pas de rayonnement actinique.

Il n'est pas nécessaire que la composition comprenne un initiateur de polymérisation photoactivable.

De préférence la composition de latex est séchée en une seule étape, par chauffage ou maintien à température ambiante.

Les exemples suivants illustrent la présente invention. Dans les exemples, sauf indication contraire, tous les parties et pourcentages sont exprimés en poids.

### 1. Compositions de latex utilisées dans les exemples

Les compositions de latex utilisées dans les exemples sont données dans le tableau I ci-dessous.

**TABLEAU I**

| Compositions de latex | | | | | | |
|---|---|---|---|---|---|---|
| Composition n° | Type de latex (%) | | | Tensio-actif (%) | Solvant | Extrait sec (%) |
| | PU | PU-urée | Acrylique | | | |
| 1a | - | W234 (99,33%) | - | A (0,67%) | eau | 31% |
| 1b | - | W234 (95,24%) | - | M (4,76%) | eau | 31,4% |
| 1c | - | W234 (94,57%) | - | A (0,67%) + M (4,76) | eau | 31,5% |
| 2a | - | TC80F (100%) | - | - | eau | 29% |
| 2b | - | TC80F (99,33%) | - | A (0,67%) | eau | 29,5% |
| 2c | - | TC80F (95,24%) | - | M (4,76%) | eau | 28,75% |
| 2d | . - | TC80F (94,57%) | - | A (0,67%) + M (4,76%) | eau | 29,4% |
| 3a | PROX R910 (100%) | - | - | - | eau | 40% |
| 3b | PROX R910 (99,33%) | - | - | A (0,67%) | eau | 39,8% |
| 3c | PROX R910 (95,24%) | - | - | M (4,76%) | eau | 39,96% |
| 3d | PROX R910 (94,57%) | - | - | A (0,67%) + M (4,76%) | eau | 40,51 % |
| | | | | | | |
| 4a | - | - | PROXAM 185 RS (100%) | - | eau | 50% |
| 4b | - | - | PROXAM 185 RS (99,43%) | A (0,67%) | eau | 49,72% |
| 4c | - | - | PROXAM 185 RS (95,24%) | M (4,76%) | eau | 49,61% |
| 4d | - | - | PROXAM 185 RS (94,57%) | A (0,67%) + M 4,76%) | eau | 49,2% |
| 5 | - | - | PROXAM 157 (100%) | - | eau | 49,73% |
| 6 | - | - | PROXAM N 360 R (100%) | - | eau | 45,62% |
| 7 | PROX R 910 (94,6%) | - | PROXAM 185 RS (4,7%) | A (0,7%) | eau | 40,5% |
| 8 | PROX R 910 (91,05%) | - | PROXAM 185 RS (3,5%) | A (0,67%) + M (4,76%) | eau | 41% |

| | | | | | | |
|---|---|---|---|---|---|---|
| A = ACTIRON F 487^{®} - tensioactif biodegradable (SYNTRON) M = MODAREZ PW 336^{®} - tensioactif à base de copolymère acrylique (SYNTRON) | | | | | | |

Les valeurs entre parenthèse dans le tableau correspondant aux quantités des composants liquides (latex liquide, surfactant,..) utilisés.

Les extraits secs totaux des compositions résultantes et des produits de départ figurent dans la colonne de droite du tableau I.

### 2. Préparation des compositions de latex n°7 et 8

On met dans un bécher la quantité pesée de PROX R 910^{®} et on y ajoute successivement les quantités pesées de PROX AM 185 RS^{®}, d'ACTIRON F 487^{®} et éventuellement de MODAREZ PW 336^{®} et agite le mélange au RAYNERIE (turbine défloculeuse de diamètre 35mm) en commençant à faible vitesse puis en augmentant la vitesse progressivement jusqu'à 1 800 tr/minute et on poursuit l'agitation pendant environ 2 heures et demie.

On laisse reposer une nuit (élimination de microbulles) avant utilisation.

### 3. Détermination des caractéristiques d'énergie de surface des couches temporaires des compositions de latex séchées

### - Préparation des échantillons

Les compositions de latex sont déposées par revêtement au trempé sur un substrat nu, biplan, de base 6, en copolymère de diéthylène glycol bis allyl carbonate (CR 39® de la société PPG - ORMA® de la société ESSILOR) en utilisant une machine de revêtement au trempé avec une vitesse de démouillage de 1 mm/s et un temps de pause de 10 secondes. Les échantillons revêtus sont ensuite séchés dans une étuve à 50°C pendant 2 heures.

### - Détermination des caractéristiques d'énergie de surface

Les caractéristiques d'énergie de surface, énergie totale, composante dispersive et composante polaire sont déterminés par la méthode d'OWENS - WENDT au moyen d'un appareil DIGIDROP GBX.

A titre de comparaison on donne également les caractéristiques d'énergie de surface de deux revêtements hydrophobes et/ou oléophobes, à savoir OPTOOL DSX^{®} de la société DAIKIN et KY 130 de SHINETSU.

Les résultats sont donnés dans le tableau Il ci-dessous.

**TABLEAU II**

| Nature de la couche | Epaisseur (µm) | Energie de surface (mJ/m²) | | |
|---|---|---|---|---|
| | | Totale | Composante dispersive | Composante polaire |
| 1 a | | 39,7 | 34,3 | 5,4 |
| 1 b | | 37,6 | 35,5 | 2,1 |
| 1 c | | 38,1 | 34,8 | 3,3 |
| 2a | 19 | 43,6 | 34,0 | 9,5 |
| 2b | | 44,2 | 35,6 | 8,6 |
| 2c | | 43,6 | 35,8 | 7,8 |
| 2d | | 39,0 | 28,0 | 10,9 |
| 3a | | 43,4 | 34,5 | 8,9 |
| 3b | | 39,8 | 37,2 | 2,6 |
| 3c | | 37,5 | 33,7 | 3,8 |
| 3d | | 36,4 | 32,4 | 4,0 |
| 4a | | - | - | - |
| 4b | | - | - | - |
| 4c | | 41,3 | 32,6 | 8,7 |
| 4d | | 47,1 | 26,8 | 20,3 |
| 5 | | 36,8 | 34,8 | 2,0 |
| 6 | | 40,9 | 33,1 | 7,8 |
| 7 | | 40,5 | 33,3 | 7,2 |
| 8 | 19 | 43,5 | 31,6 | 12,1 |
| OPTOOLD SX | 2,6nm | 11,3 | 11,1 | 0,2 |
| KY130 | | 13,1 | 13,0 | 1,0 |

Exemples 1 à 10 et exemples comparatifs C1 à C6.

On a, comme décrit ci-dessus, formé des couches temporaires sur
- un substrat ORMA® (sphère : -5,00 cylindre + 2,00, diamètre 65mm et épaisseur au centre 1,9mm)
- un substrat polycarbonate (sphère : -8,00 cylindre : +2,00 diamètre 65mm et épaisseur au centre 1,3mm)
- un substrat ORMIX® 1.6 (sphère : -8,00 cylindre : +2,00 diamètre 65mm et épaisseur au centre 1,1mm
préalablement revêtu, dans l'ordre indiqué, d'un revêtement anti-abrasion, d'un revêtement anti-reflet et d'un revêtement externe hydrophobe et/ou oléophobe (OPTOOL DSX, épaisseur 2,6 nm) comme décrit à l'exemple 1 du brevet EP 1 392 613. On a observé visuellement la formation de la couche temporaire et effectué des essais de débordage, de perçage des échantillons. Les caractéristiques des couches temporaires et les résultats sont donnés dans le tableau III.

### PROTOCOLE DE MESURE DE DESAXAGE DE LENTILLES SOUMISES A UNE OPERATION DE DEBORDAGE

### I- Description du test

Le test de débordage est effectué sur une meuleuse Essilor Kappa.

Les lentilles sont débordés de façon à leur donner la forme d'un gabarit de monture spécifique (voir ci-dessous).

Les équipements suivants sont nécessaires pour réaliser le test :
Frontofocomètre Essilor CLE 60 ( pour pointage des verres et contrôle final)
Chaîne numérique Essilor Kappa (Centreur/Bloqueur et Meuleuse)
Gabarit de monture de type Charmant référence 8320, modèle 05, taille 51 Pseudo monture de contrôle.
Pastille adhésive ou patin adhésif de maintien LEAP Il de diamètre 24 mm GAM200 de la société 3M
Gland Essilor pour accueillir la pastille adhésive.

### II- L'échantillonnage et les paramètres de montage.

Les cotes de montage retenues sont les suivantes :
Hauteur : Demi-hauteur boxing soit
PD (droite et gauche) = 32 mm et Axe = 90°

Le cycle de détourage utilisé est un cycle adapté au matériau (cycle plastique pour bas indice, cycle polycarbonate pour PC et cycle pour substrat Moyen indice de réfraction MHI). La pression de serrage retenue est la pression correspondant à l'option verre fragile de la meuleuse.

### III- Contrôles

Après débordage, on effectue un contrôle afin de déterminer si l'opération de débordage a été effectuée de façon satisfaisante.

Les contrôles sont effectués à l'aide du frontofocomètre CLE 60 en pointant les lentilles placées dans la pseudo-monture. Les axes sont repérés durant cette phase.

Si la lentille, après l'opération de débordage ne peut être insérée dans la pseudo-monture ou si la lentille peut être insérée dans la pseudo-monture, mais qu'elle présente un désaxage de plus de 2°, la lentille est non-conforme et n'a pas passé le test. Elle est référencée - dans le tableau de résultats.

Si le verre présente un désaxage de moins de 2°, la lentille passe le test et elle est référencée X dans le tableau de résultats.

### PERCAGE APRES DEBORDAGE

Après l'opération de débordage, l'ensemble lentille et gland/patin adhésif, avec le gland/patin adhésif adhérant fermement à la lentille est placé dans une machine de perçage Optodrill ou Minima2 et maintenu par un bloqueur.

La lentille est alors percée
- soit manuellement avec la perceuse Minima 2 munie d'un foret de 2.2 mm de diamètre, de vitesse de rotation 3500 tours/minute.
- soit automatiquement avec la perceuse Optidrill Evo munie d'un foret de 2,2 mm de diamètre de vitesse de rotation 12000 tours/minute.

Après perçage, on dévisse le système de fixation et on récupère la lentille percée et le gland/patin adhésif.

Puis le gland est ôté et la lentille percée récupérée.

Lorsque la lentille peut être positionnée dans le dispositif de perçage et passe de ce fait avec succès l'opération de perçage, elle est notée X dans le tableau III. Dans le cas contraire, elle est notée -.

Pour les lentilles des exemples 1 à 8 et C1 à C6, le patin adhésif perd son adhésion après l'opération de débordage et ne permet pas le perçage.

Pour les lentilles des exemples 9 et 10, le patin adhésif reste fermement maintenu sur la lentille après l'opération de débordage et permet de positionner la lentille dans le dispositif de perçage et d'effectuer un perçage correct.

**TABLEAU III**

| Ex n° | Couche temporaire | | Formation d'un film | Débordage simple | Débordage Total | Perçage après débordage total |
|---|---|---|---|---|---|---|
| | Compositio n de latex | Epaisseur (µm) | | | | |
| 1 | 2a | 19 | X | X | - | - |
| 2 | 2b | | X | X | - | - |
| 3 | 2c | | X | X | - | - |
| 4 | 2d | | X | X | - | - |
| 5 | 3a | | X | X | - | - |
| 6 | 3b | | X | X | X | |
| 7 | 3c | | X | X | X | |
| 8 | 3d | | X | X | X | |
| 9 | 7 | | X | X | X | X |
| 10 | 8 | 19 | X | X | X | X |
| C1 | 4a | | - | - | - | - |
| C2 | 4b | | - | - | - | - |
| C3 | 4c | | - | - | - | - |
| C4 | 4d | | - | - | - | - |
| C5 | 5 | | - | - | - | - |
| C6 | 6 | | - | - | - | - |

| | | | | | | |
|---|---|---|---|---|---|---|
| X=oui -=non | | | | | | |

On a également mesuré l'angle de contact avec l'eau du revêtement externe hydrophobe et/ou oléophobe de l'échantillon de l'exemple 8 après enlèvement de la couche temporaire en référence à la valeur de cet angle de contact pour le même revêtement hydrophobe et/ou oléophobe avant dépôt de la couche temporaire. A titre de comparaison on a effectué la mesure de l'angle de contact avec l'eau pour un produit du commerce Platinum® (substrat d'indice de réfraction 1,56) de la société HANDOK OPTEC.

On a répété les mesures après traitement à la soude caustique du revêtement hydrophobe et/ou oléophobe.

Les résultats sont donnés dans le tableau IV

**TABLEAU IV**

| | Nature du revêtement hydrophobe et/ou oléophobe/couche temporaire retirée | Angle de contact avec l'eau (°) | |
|---|---|---|---|
| | | Sans traitement à la soude caustique | Après traitement à la soude caustique |
| EX 11 (invention) | OPTOOL DSX 2,6 nm/latex n°8 (exemple 10) | 117° - 120° | 114° - 115° |
| Ref. 1 | OPTOOL DSX - 3 nm | 117° - 120° | 113° |
| Ref. 2 | KY 130 | 110° | 109° |
| Comparatif 1 | Produit Platinum^{®} | 111° | - |

La mesure de l'angle de contact s'effectue au moyen d'un goniomètre KRÜSS référence DSA 10 en déposant 5 gouttes d'eau désionisée (4 µl par goutte) sur la surface nettoyée et sèche de la lentille, une au centre et les quatre autres à 20mm de celle-ci.

Le traitement à la soude caustique qui a pour but de vérifier la résistance du revêtement hydrophobe et/ou oléophobe consiste à tremper la lentille 1 minute dans une solution de soude 0,1N, puis à rincer à l'eau et à l'alcool isopropylique, sécher, mesurer les angles de contact, tremper à nouveau 29 minutes dans la solution de soude 0,1N, rincer et sécher à nouveau et mesurer les angles de contact. La valeur de l'angle de contact est la moyenne des résultats.

Le verre est considéré comme ayant passé avec succès le traitement à la soude caustique lorsque les valeurs moyennes d'angle de contact sans traitement à la soude et l'angle de contact après traitement à la soude sont proches des valeurs visées définies ci-dessous :

| Nature du revêtement hydrophobe et/ou oléophobe/couche temporaire retirée | Valeurs visées « Angle de contact » avec l'eau (°) | |
|---|---|---|
| | Sans traitement à la soude caustique | Après traitement à la soude caustique |
| OPTOOL DSX~ 3nm | 117°-120° | 113°-114° |
| KY 130 (20nm consignée) | 110° | 109° |

Le revêtement temporaire selon l'invention présente les avantages d'être applicable par voie liquide, de permettre d'effectuer un marquage des verres sur la couche temporaire, de préserver la faible énergie de surface du revêtement hydrophobe et/ou oléophobe, en particulier de mieux préserver l'angle de contact avec l'eau après retrait du revêtement temporaire et d'être polyvalent, c'est-à-dire de pouvoir être déposé sur différentes couches hydrophobes et/ou oléophobes.

## Revendications

1. Article d'optique comportant sur une de ses surfaces principales un revêtement externe hydrophobe et/ou oléophobe, **caractérisé en ce qu'**une couche temporaire d'une composition de latex de polyuréthane séchée est directement déposée sur le revêtement externe hydrophobe et/ou oléophobe.

2. Article d'optique selon la revendication 1, **caractérisé en ce que** le revêtement externe hydrophobe et/ou oléophobe a une énergie de surface égale ou inférieure à 14 mJ/m2, de préférence égale ou inférieure à 13 mJ/m² , mieux égale ou inférieure à 12 mJ/m².

3. Article d'optique selon la revendication 1 ou 2, **caractérisé en ce que** la couche temporaire a une énergie de surface supérieure ou égale à 15 mJ/m², de préférence égale ou supérieure à 20 mJ/m², mieux encore égale ou supérieure à 30 mJ/m², et préférentiellement une composante polaire de l'énergie de surface inférieure à 26 mJ/m².

4. Article d'optique selon l'une quelconque des revendications 1 à 3, **caractérisé en ce que** la couche temporaire à une épaisseur de 10 à 40 µm, de préférence 15 à 30 µm et mieux 15 à 20 µm.

5. Article d'optique selon l'une quelconque des revendications précédentes, **caractérisé en ce que** la couche temporaire présente un allongement à la rupture égal ou inférieur à 200%, de préférence égal ou inférieur à 150%.

6. Article d'optique selon l'une quelconque des revendications précédentes, **caractérisé en ce que** la composition de latex de polyuréthane est un mélange d'au moins un latex de polyuréthane et d'au moins un latex poly(méth)acrylique, de préférence un latex polyacrylique.

7. Article d'optique selon la revendication 6, **caractérisé en ce que** la composition de latex de polyuréthane renferme 0,1 à 10% en poids, de préférence 2 à 6% en poids d'un latex polyacrylique.

8. Article d'optique selon l'une quelconque des revendications précédentes, **caractérisé en ce que** la composition de latex de polyuréthane à une teneur en solide de 25 à 55% en poids, de préférence de 25 à 50%, et mieux de 25 à 45% en poids par rapport au poids total de la composition de latex.

9. Article d'optique selon l'une quelconque des revendications précédentes, **caractérisé en ce que** la composition de latex de polyuréthane contient au moins un tensio-actif.

10. Article d'optique selon la revendication 9, **caractérisé en ce que** le ou les tensio-actifs sont présents à raison de 0,5 à 10%, de préférence 0,5 à 6% en poids par rapport au poids total de la composition de latex de polyuréthane.

11. Article d'optique selon l'une quelconque des revendications précédentes, **caractérisé en ce que** la couche temporaire est un film pelable.

12. Article d'optique selon l'une quelconque des revendications précédentes, **caractérisé en ce que** le revêtement externe hydrophobe et/ou oléophobe est déposé sur un revêtement anti-reflet mono ou multi-couche.

13. Article d'optique selon l'une quelconque des revendications précédentes, **caractérisé en ce qu'**il constitue une lentille ophtalmique.

## Claims

1. An optical article comprising on one of the main surfaces thereof an external water- and/or oil-repellent coating, **characterized in that** a temporary coat of a dried polyurethane latex-based composition is directly deposited onto the external water- and/or oil-repellent coating.

2. An optical article according to claim 1, **characterized in that** the external water- and/or oil-repellent coating has a surface energy lower than or equal to 14 mJ/m2, preferably lower than or equal to 13 mJ/m², more preferably lower than or equal to 12 mJ/m²*.*

3. An optical article according to claim 1 or 2, **characterized in that** the temporary coat has a surface energy higher than or equal to 15 mJ/m², preferably higher than or equal to 20 mJ/m²*,* more preferably higher than or equal to 30 mJ/m², and preferably a surface energy polar component lower than 26 mJ/m².

4. An optical article according to any one of claims 1 to 3, **characterized in that** the temporary coat has a thickness ranging from 10 to 40 µm, preferably from 15 to 30 µm and more preferably from 15 to 20 µm.

5. An optical article according to any one of the preceding claims, **characterized in that** the temporary coat has an elongation at break equal to or lower than 200%, preferably equal to or lower than 150%.

6. An optical article according to any one of the preceding claims, **characterized in that** the polyurethane latex-based composition is a combination of at least one polyurethane latex and of at least one poly(meth)acrylic latex, preferably a polyacrylic latex.

7. An optical article according to claim 6, **characterized in that** the polyurethane latex-based composition comprises from 0.1 to 10% by weight, preferably from 2 to 6% by weight of a polyacrylic latex.

8. An optical article according to any one of the preceding claims, **characterized in that** the polyurethane latex-based composition has a solid content ranging from 25 to 55% by weight, preferably from 25 to 50%, and more preferably from 25 to 45% by weight of the latex-based composition total weight.

9. An optical article according to any one of the preceding claims, **characterized in that** the polyurethane latex-based composition comprises at least one surfactant.

10. An optical article according to claim 9, **characterized in that** the surfactant(s) represent(s) from 0.5 to 10%, preferably from 0.5 to 6% by weight of the polyurethane latex-based composition total weight.

11. An optical article according to any one of the preceding claims, **characterized in that** the temporary coat is a strippable film.

12. An optical article according to any one of the preceding claims, **characterized in that** the external water- and/or oil-repellent coating is deposited onto a mono- or multilayered antireflective coating.

13. An optical article according to any one of the preceding claims, **characterized in that** it is an ophthalmic lens.

## Patentansprüche

1. Optischer Gegenstand mit einer externen hydrophoben und/oder oleophoben Beschichtung an einer seiner Hauptoberflächen, **dadurch gekennzeichnet, dass** eine temporäre Schicht einer getrocknetem Polyurethan-Latex-Zusammensetzung direkt auf die externe hydrophobe und/oder oleophobe Beschichtung aufgebracht ist.

2. Optischer Gegenstand nach Anspruch 1, **dadurch gekennzeichnet, dass** die externe hydrophobe und/oder oleophobe Beschichtung eine Oberflächenenergie gleich oder kleiner als 14 mJ/m², vorzugsweise gleich oder kleiner als 13 mJ/m², besser gleich oder kleiner als 12 mJ/m² hat.

3. Optischer Gegenstand nach Anspruch 1 oder 2, **dadurch gekennzeichnet**, das die temporäre Schicht eine Oberflächenenergie größer als oder gleich 15 mJ/m², vorzugsweise gleich oder größer als 20 mJ/m², noch besser gleich oder größer als 30 mJ/m², und bevorzugt eine polare Komponente einer Oberflächenenergie kleiner als 26 mJ/m² hat.

4. Optischer Gegenstand nach einem der Ansprüche 1 bis 3, **dadurch gekennzeichnet, dass** die temporäre Schicht eine Dicke von 10 bis 40 µm, vorzugsweise 15 bis 30 µm und besser 15 bis 20 µm hat.

5. Optischer Gegenstand nach einem der vorhergehenden Ansprüche, **dadurch gekennzeichnet, dass** die temporäre Schicht eine Bruchdehnung gleich oder kleiner als 200%, vorzugsweise gleich oder kleiner als 150% aufweist.

6. Optischer Gegenstand nach einem der vorhergehenden Ansprüche, **dadurch gekennzeichnet, dass** die Polyurethan-Latex-Zusammensetzung eine Mischung aus mindestens einem Polyurethan-Latex und mindestens einem poly(meth)acrylhaltigen Latex ist, vorzugsweise einem polyacrylhaltigen Latex.

7. Optischer Gegenstand nach Anspruch 6, **dadurch gekennzeichnet, dass** die Zusammensetzung aus aus Polyurethan-Latex 0,1 bis 10 Gew.-%, vorzugsweise 2 bis 6 Gew.-% eines polyacrylhaltigen Latex umfasst.

8. Optischer Gegenstand nach einem der vorhergehenden Ansprüche, **dadurch gekennzeichnet dass** die Zusammensetzung aus aus Polyurethan-Latex ein Feststoffgehalt von 25 bis 55 Gew,-%, vorzugsweise von 25 bis 50%, und besser von 25 bis 45 Gew,-% im Verhältnis zum Gesamtgewicht der Latex-Zusammensetzung hat.

9. Optischer Gegenstand nach einem der vorhergehenden Ansprüche, **dadurch gekennzeichnet, dass** die Polyurethan-Latex-Zusammensetzung mindestens ein Tensid enthält,

10. Optischer Gegenstand nach Anspruch 9, **dadurch gekennzeichnet, dass** das oder die Tensid(e) mit 0,5 bis 10%, vorzugsweise 0,5 bis 6 Gew.-% im Verhältnis zum Gesamtgewicht der Polyurethan-Latex-Zusammensetzung repräsentiert sind.

11. Optischer Gegenstand nach einem der vorhergehenden Ansprüche, **dadurch** gekenntzeichnet, dass die temporäre Schicht eine abziehbare Folie ist.

12. Optischer Gegenstand nach einem der vorhergehenden Ansprüche, **dadurch gekennzeichnet, dass** die externe hydrophobe und/oder oleophobe Beschichtung auf einer ein- oder mehrschichtigen anti-Reflex-Beschichtung aufgebracht ist.

13. Optischer Gegenstand nach einem der vorhergehenden Ansprüche, **dadurch gekennzeichnet, dass** er eine ophthaimische Linse bildet.
